# EUROPÄISCHE PATENTSCHRIFT

(11) **EP 3 088 233 B1**
(45) Veröffentlichungstag und Bekanntmachung des Hinweises auf die Patenterteilung: **20.01.2021**
(21) Anmeldenummer: 16162024.0
(22) Anmeldetag: 23.03.2016
(51) Int. Cl.: B60K 23/08

(54) **VERFAHREN UND STEUEREINHEIT ZUR TRAKTIONSKONTROLLE VON ANGETRIEBENEN RÄDERN SOWIE LANDWIRTSCHAFTLICHE ARBEITSMASCHINE**
METHOD AND CONTROL UNIT FOR TRACTION CONTROL OF DRIVEN WHEELS AND AGRICULTURAL WORKING MACHINE
PROCEDE ET UNITE DE COMMANDE DESTINES A LA COMMANDE DE TRACTION DE ROUES ENTRAINEES ET MACHINE DE TRAVAIL AGRICOLE

(30) Priorität: 27.04.2015 DE 102015207623
(43) Veröffentlichungstag der Anmeldung: 02.11.2016
(73) Patentinhaber: ZF Friedrichshafen AG, 88046 Friedrichshafen (DE)
(72) Erfinder: Ebertseder, Thomas, 94060 Pocking (DE)
(74) Vertreter: ZF Friedrichshafen AG

(56) Entgegenhaltungen:
- EP-A2- 1 364 824
- DE-A1-102005 022 243
- US-A1- 2003 168 274

## Beschreibung

Die Erfindung betrifft ein Verfahren zur Traktionskontrolle von angetriebenen Rädern gemäß dem Oberbegriff von Anspruch 1, eine Steuereinheit zur Traktionskontrolle von angetriebenen Rädern gemäß dem Oberbegriff von Anspruch 8 sowie eine landwirtschaftliche Arbeitsmaschine.

Im Stand der Technik sind unter den Begriffen Antriebsschlupfregelung und Motorschleppmomentregelung Fahrzeugassistenzsysteme bekannt, welche insbesondere bei schwierigen Untergrundverhältnissen ein Durchdrehen eines oder mehrerer Räder aufgrund von mangelnder Kraftübertragungsfähigkeit der Räder auf den Untergrund verhindern sollen. Ein Durchdrehen eines oder mehrerer Räder hat stets einen Verlust der Seitenführungskraft dieser Räder zur Folge, was wiederum ein unkontrolliertes Ausbrechen des Fahrzeugs bewirken kann und mit einem hohen Gefährdungspotential für den Fahrer und umgebende Verkehrsteilnehmer verbunden ist. Die Antriebsschlupfregelung dient dabei dem Verhindern eines Durchdrehens der Räder aufgrund von zu großen auf die Räder wirkenden Antriebsmomenten. Entsprechend reduziert die Antriebsschlupfregelung bei Erkennen eines Traktionsverlusts aufgrund zu hoher Antriebsmomente die Antriebsmomente an den entsprechenden Rädern. Die Motorschleppmomentregelung hingegen dient dem Verhindern eines Durchdrehens der Räder aufgrund einer plötzlichen Gaswegnahme und dem damit einhergehenden Auftreten eines Motorschleppmoments, welches als Verzögerungsmoment an den Rädern wirkt. Entsprechend reduziert die Motorschleppmomentregelung bei Erkennen eines Traktionsverlusts aufgrund des Motorschleppmoments das erzeugte Motorschleppmoment.

In diesem Zusammenhang beschreibt die DE 35 28 389 C2 eine Anordnung zur Regelung des Antriebsschlupfs eines von einer Brennkraftmaschine über ein Schaltgetriebe und eine Reibungskupplung angetriebenen Antriebsrads eines Kraftfahrzeugs. Die Anordnung umfasst einen ersten Drehzahlsensor, der ein der Drehzahl des Antriebsrads oder der Ausgangsdrehzahl des Schaltgetriebes entsprechendes erstes Drehsignal erzeugt, einen zweiten Drehzahlsensor, der ein der Drehzahl eines geschleppten Rades des Kraftfahrzeugs entsprechendes zweites Drehzahlsignal erzeugt und eine auf die beiden Drehzahlsignale ansprechende Drehmomentstellanordnung. Die Drehmomentstellanordnung mindert das Antriebsdrehmoment des Antriebsrads, wenn das erste Drehzahlsignal eine höhere Drehzahl repräsentiert als das zweite Drehzahlsignal. Die Reibungskupplung ist über einen Positions-Servoantrieb mit geschlossener Regelschleife ein- und ausrückbar. Die Drehmomentstellanordnung steuert den Antrieb der Kupplung in Ausrückrichtung, wenn das erste Drehzahlsignal eine um wenigstens einen vorbestimmten Differenzwert höhere Drehzahl repräsentiert als das zweite Drehzahlsignal, und in Einrückrichtung, wenn sich die durch das erste und das zweite Drehzahlsignal repräsentierten Drehzahlinformationen um weniger als den vorbestimmten Differenzwert unterscheiden.

Die DE 10 2005 053 852 A1 offenbart eine Motorschleppmomentregelung über automatisierte Kupplungssysteme. Bei festgestelltem erhöhtem Bremsschlupf an mindestens einem der angetriebenen Räder werden eine Kupplung oder mehrere Kupplungen im Triebstrang des Fahrzeugs geöffnet, wodurch die rotatorische Massenträgheit des Motors von den Rädern entkoppelt wird, sodass der Fahrbahnbelag die mit Schlupf drehenden Räder wieder gleichsam antreiben kann und das Fahrzeug für den Fahrer wieder beherrschbar wird. Im Vergleich zur Motorschleppmomentregelung über eine Drehmomenterhöhung der Verbrennungskraftmaschine kann das Öffnen von Kupplungen innerhalb des Triebstranges vergleichsweise schnell erfolgen.

Die bekannten Antriebsschlupfregelsysteme bzw. -verfahren und Motorschleppmomentregelsysteme bzw. -verfahren sind jedoch insofern nachteilbehaftet, als dass diese sich auf eine Regelung der Antriebsmomente bzw. Verzögerungsmomente beschränken, d.h. den auf die Räder wirkenden Gesamtbetrag der Antriebsmomente bzw. Verzögerungsmomente verändern. Dies verändert jedoch den Fahrerwunsch.

Aus der US 2003/0168274 A1 ist eine Vierradantriebsvorrichtung bekannt, welche eine Drehmomentübertragungsanordnung umfasst, wobei die Drehmomentübertragungsanordnung nach Maßgabe einer Steuereinrichtung Drehmoment empfängt und selektiv ein bestimmtes Drehmoment auf eine Vorderachse oder eine Hinterachse überträgt. Das jeweils übertragene Drehmoment ist abhängig vom Auftreten eines Schlupfzustands der angetriebenen bzw. der stärker angetriebenen Räder.

Es ist eine Aufgabe der vorliegenden Erfindung, ein verbessertes Verfahren zur Traktionskontrolle vorzuschlagen.

Diese Aufgabe wird erfindungsgemäß durch das Verfahren zur Traktionskontrolle von angetriebenen Rädern gemäß Anspruch 1 gelöst. Vorteilhafte Ausgestaltungen und Weiterbildungen der Erfindung gehen aus den abhängigen Ansprüchen hervor.

Die Erfindung betrifft ein Verfahren zur Traktionskontrolle von angetriebenen Rädern eines mehrachsigen Kraftfahrzeugs, wobei die angetriebenen Räder mindestens einer Achse des Kraftfahrzeugs zugeordnet sind, wobei mindestens einer weiteren Achse des Kraftfahrzeugs weitere Räder zugeordnet sind, welche mittels einer Betätigung einer Zuschaltvorrichtung antreibbar sind und mittels eines Lösens der Zuschaltvorrichtung schleppbar sind, wobei von einer Steuereinheit Drehzahlinformationen der angetriebenen Räder erfasst werden und mit einem Referenzwert verglichen werden und wobei bei einem Überschreiten einer oberen Schwellenabweichung vom Referenzwert durch die Drehzahlinformationen oder bei einem Unterschreiten einer unteren Schwellenabweichung vom Referenzwert durch die Drehzahlinformationen von der Steuereinheit auf Traktionsverlust der angetriebenen Räder erkannt wird. Das erfindungsgemäße Verfahren zeichnet sich dadurch aus, dass die Betätigung der Zuschaltvorrichtung automatisiert durch die Steuereinheit bei Erkennen auf Traktionsverlust der angetriebenen Räder erfolgt.

Ein Traktionsverlust der angetriebenen Räder tritt üblicherweise auf, wenn die Kraftübertragungsfähigkeit der angetriebenen Räder geringer ist als die von ihnen auf den Untergrund zu übertragende Kraft. Dies kann beispielsweise der Fall sein, wenn ein auf die angetriebenen Räder gegebenes Antriebsmoment größer ist als die Kraftübertragungsfähigkeit der angetriebenen Räder oder wenn z.B. nach dem Schalten aus einem höheren Gang in einen niedrigeren Gang und nach dem Wiedereinkuppeln bei hoher Geschwindigkeit ein vom Antriebsstrang auf die angetriebenen Räder gegebenes Verzögerungsmoment größer ist als die Kraftübertragungsfähigkeit der angetriebenen Räder.

Das erfindungsgemäße Verfahren führt nun zu dem Vorteil, dass bei drohendem bzw. auftretendem Traktionsverlust der angetriebenen Räder die Gesamtkraft-übertragungsfähigkeit der angetriebenen Räder bzw. des Kraftfahrzeugs auf den Untergrund vergrößert wird, indem die antreibbaren Räder der weiteren, bisher nicht angetriebenen Achse, ebenfalls angetrieben werden, indem also die Anzahl der angetriebenen Räder vergrößert wird. Bei einem typischen, zweiachsigen und vierrädrigen Kraftfahrzeug entspricht dies z.B. dem Zuschalten eines Allradantriebs. Durch diese Zunahme der Anzahl der angetriebenen Räder erhöht sich die Kraftübertragungsfähigkeit des Kraftfahrzeugs über seine angetriebenen Räder auf den Untergrund im Wesentlichen im gleichen Maße wie sich die Anzahl der angetriebenen Räder erhöht.

Die Steuereinheit erfasst die Drehzahl der angetriebenen Räder bevorzugt über an den Rädern ohnehin angebrachten Drehzahl- bzw.- ABS-Sensoren. Somit kann auf ohnehin vorhandene Sensorik des Kraftfahrzeugs zurückgegriffen werden, was die Implementierungskosten für das erfindungsgemäße Verfahren in ein Kraftfahrzeug gering hält.

Die obere bzw. untere Schwellenabweichung kann z.B. ein Verhältnis angeben, um welches die Drehzahlinformationen der angetriebenen Räder mindestens vom Referenzwert abweichen müssen, um auf Traktionsverlust der angetriebenen Räder zu erkennen, oder aber einen absoluten Wert angeben, um welchen die Drehzahlinformationen der angetriebenen Räder mindestens vom Referenzwert abweichen müssen, um auf Traktionsverlust der angetriebenen Räder zu erkennen. Beispielsweise kann die Schwellenabweichung im ersteren Fall z.B. 3 % oder 5 % betragen, im letzteren Fall z.B. 15 Umdrehungen/min oder 30 Umdrehungen/min.

Die Zuschaltvorrichtung ist bevorzugt als lastschaltbare Zuschaltvorrichtung, z.B. als nasslaufende Lamellenkupplung ausgebildet. Dies begünstigt eine automatisierte Betätigung der Zuschaltvorrichtung während der Fahrt.

Bei dem Kraftfahrzeug handelt es sich bevorzugt um eine landwirtschaftliche Arbeitsmaschine.

Es soll noch erwähnt werden, dass das erfindungsgemäße Verfahren nicht auf eine Anwendung in zweiachsigen bzw. vierrädrigen Fahrzeugen beschränkt ist. Vielmehr eignet sich das erfindungsgemäße Verfahren zur Anwendung in Fahrzeugen mit beliebig vielen Achsen, von denen mindestens eine angetriebene Räder aufweist und mindestens eine weitere mittels einer Betätigung einer Zuschaltvorrichtung antreibbare Räder aufweist.

Unter dem Begriff "angetriebene Räder" werden im Sinne der Erfindung Räder verstanden, die im Betrieb des Kraftfahrzeugs mit dem Antriebsstrang bzw. dem Antriebsaggregat trieblich verbunden sind. Diese Räder sind nichtsdestotrotz über eine Hauptkupplung vom Antriebsstrang bzw. vom Antriebsaggregat trieblich trennbar, so dass auch ein Stillstand des Kraftfahrzeugs bei laufendem Antriebsaggregat ermöglicht wird. Während einer angetriebenen, nicht-rollenden Fahrt sind die angetriebenen Räder im Sinne der Erfindung jedoch stets mit dem Antriebsstrang trieblich verbunden.

Unter den Begriffen "antreibbare Räder" und "schleppbare Räder" werden im Sinne der Erfindung Räder verstanden, die über die Zuschaltvorrichtung wahlweise mit dem Antriebsstrang bzw. dem Antriebsaggregat des Kraftfahrzeugs trieblich verbindbar sind bzw. von diesem trieblich trennbar sind. Somit werden diese Räder je nach Zustand der Zuschaltvorrichtung entweder angetrieben oder geschleppt.

Unter dem Begriff "Drehzahlinformationen" werden im Sinne der Erfindung alle Arten von Informationen verstanden, welche eine Drehzahl der Räder des Kraftfahrzeugs repräsentieren können. Dies kann beispielsweise eine Winkelgeschwindigkeit, eine elektrische Spannung, eine Folge von elektrischen Strompulsen oder auch die Drehzahl selbst sein. Der Referenzwert wird bevorzugt in derselben Repräsentationsform gebildet wie die Drehzahlinformationen. Wenn also die Drehzahlinformationen z.B. eine Folge von elektrischen Strompulsen sind, so ist bevorzugt auch der Referenzwert eine Folge von elektrischen Strompulsen.

Gemäß einer bevorzugten Ausführungsform der Erfindung ist es vorgesehen, dass der Referenzwert ständig in Abhängigkeit von Fahrsituationen ermittelt wird. Die Fahrsituationen beschreiben dabei nicht nur Geschwindigkeiten des Kraftfahrzeugs sondern besonders bevorzugt auch Kurvenfahrten, bei denen das kurvenäußere Rad eine höhere Drehzahl aufweist als das kurveninnere Rad. Indem der Referenzwert ständig ermittelt wird, d.h. ständig neu bestimmt wird, kann ein drohender oder auftretender Traktionsverlust jederzeit nahezu unmittelbar erkannt werden. Beispielsweise kann der Referenzwert alle 50 ms, alle 100 ms oder alle 300 ms ermittelt werden. Es ist jedoch auch jede beliebige andere Taktung zur Ermittlung des Referenzwerts denkbar.

Der Referenzwert ist bevorzugt abrufbar in einem elektronischen Speicher der Steuereinheit abgelegt, insbesondere in einem wiederbeschreibbaren und überschreibbaren elektronischen Speicher. Besonders bevorzugt ist der Referenzwert in einem flüchtigen elektronischen Speicher abgelegt.

Gemäß einer weiteren bevorzugten Ausführungsform der Erfindung ist es vorgesehen, dass der Referenzwert aus Drehzahlinformationen von geschleppten Rädern ermittelt wird. Da die geschleppten Räder, abgesehen von Seitenführungskräften, üblicherweise kaum weitere Kräfte übertragen, besteht nur ein minimales Risiko, dass die geschleppten Räder einen Traktionsverlust erleiden. Somit entsprechen die Drehzahlinformationen der geschleppten Räder in aller Regel der tatsächlichen Geschwindigkeit des Kraftfahrzeugs. Entsprechend gut eignen sich diese Drehzahlinformationen zur Ermittlung des Referenzwerts. Sofern das Fahrzeug nach Betätigung der Zuschaltvorrichtung keine geschleppten Räder mehr aufweist sondern nur noch angetriebene Räder aufweist, kann der Referenzwert aus einer gemittelten Drehzahlinformation aller angetriebenen Räder oder aus den Drehzahlinformationen des am langsamsten drehenden angetriebenen Rads ermittelt werden.

Gemäß einer weiteren bevorzugten Ausführungsform der Erfindung ist es vorgesehen, dass das Lösen der Zuschaltvorrichtung automatisiert erfolgt, wenn auf Wiederherstellung einer Traktion der angetriebenen Räder erkannt wird. Das Erkennen auf Wiederherstellung der Traktion der angetriebenen Räder kann z.B. von der Steuereinheit daran erkannt werden, dass die Drehzahl der angetriebenen Räder um nicht mehr als die obere oder die untere Schwellenabweichung vom Referenzwert abweicht. Da bei Wiederherstellung der Traktion der angetriebenen Räder die Gefahrensituation beendet ist, kann die zuvor automatisiert erfolgte Zuschaltung der antreibbaren Räder wieder gelöst werden, um Treibstoff zu sparen und den CO₂-Ausstoß zu reduzieren.

Gemäß einer weiteren bevorzugten Ausführungsform der Erfindung ist es vorgesehen, dass die Betätigung der Zuschaltvorrichtung und das Lösen der Zuschaltvorrichtung elektronisch über einen Fahrzeugdatenbus erfolgt. Daraus ergibt sich der Vorteil, dass eine im Kraftfahrzeug üblicherweise ohnehin vorhandene Datenverbindung genutzt werden kann, was ebenfalls dazu beiträgt, die Implementierungskosten für die Anwendung des erfindungsgemäßen Verfahrens in ein Kraftfahrzeug gering zu halten. Bekannte Fahrzeugdatenbusse sind etwa der sog. CAN-Bus oder der sog. Flexray-Bus. Alle Arten von bekannten Fahrzeugdatenbussen sind zur Ausführung des erfindungsgemäßen Verfahrens jedoch prinzipiell gleichermaßen geeignet.

Gemäß einer weiteren bevorzugten Ausführungsform der Erfindung ist es vorgesehen, dass die Betätigung der Zuschaltvorrichtung und das Lösen der Zuschaltvorrichtung elektronisch über eine unmittelbare Datenanbindung der Steuereinheit an die Zuschaltvorrichtung erfolgt. Daraus ergibt sich der Vorteil, dass die Betätigung der Zuschaltvorrichtung bzw. das Lösen der Zuschaltvorrichtung im Wesentlichen unmittelbar nach dem Erkennen auf Traktionsverlust erfolgen kann, da die hierfür notwendigen elektronischen Befehle ohne Verzögerung und ohne den Umweg über weitere Schnittstellen und Datenknotenpunkte direkt an die Zuschaltvorrichtung bzw. an einen Aktuator der Zuschaltvorrichtung bzw. an ein Steuermodul des Aktuators der Zuschaltvorrichtung gegeben werden können. Die unmittelbare Datenanbindung kann z.B. als ein zur Datenübertragung geeignetes, mehradriges und geschirmtes Kabel ausgebildet sein.

Gemäß der Erfindung ist vorgesehen, dass die Betätigung der Zuschaltvorrichtung automatisiert erst bei Überschreiten einer Geschwindigkeitsschwelle des Kraftfahrzeugs erfolgt. Da bei geringen Geschwindigkeiten des Kraftfahrzeugs bzw. beim Anfahren des Kraftfahrzeugs aus dem Stillstand keine bzw. nur eine minimale Gefährdung durch einen auftretenden Traktionsverlust entsteht, kann in diesen Fällen auf eine automatisierte Betätigung der Zuschaltvorrichtung verzichtet werden. Stattdessen kann die Zuschaltvorrichtung in diesen Fällen manuell, beispielsweise durch Drücken eines Tasters durch den Fahrer, betätigt werden. Daraus ergibt sich der Vorteil, dass eine Bevormundung des Fahrers durch die Steuereinheit auf ein Minimum beschränkt wird. Die Geschwindigkeitsschwelle kann dabei beliebig festgelegt werden, wobei eine geringe Geschwindigkeitsschwelle einen Zuwachs an Sicherheit bedeutet, während eine hohe Geschwindigkeitsschwelle den Fahrer nur minimal bevormundet. Beispielsweise kann die Geschwindigkeitsschwelle bei 5 km/h, 10 km/h oder 15 km/h liegen.

Die Erfindung betrifft weiterhin eine Steuereinheit zur Traktionskontrolle von angetriebenen Rädern für ein mehrachsiges Kraftfahrzeug, wobei die angetriebenen Räder mindestens einer Achse des Kraftfahrzeugs zugeordnet sind und wobei mindestens einer weiteren Achse des Kraftfahrzeugs weitere Räder zugeordnet sind, welche mittels einer Betätigung einer Zuschaltvorrichtung antreibbar sind und mittels eines Lösens der Zuschaltvorrichtung schleppbar sind, wobei die Steuereinheit dazu ausgebildet ist, Drehzahlinformationen der angetriebenen Räder zu erfassen und mit einem Referenzwert zu vergleichen und wobei die Steuereinheit dazu ausgebildet ist, bei einem Überschreiten einer oberen Schwellenabweichung vom Referenzwert durch die Drehzahlinformationen oder bei einem Unterschreiten einer unteren Schwellenabweichung vom Referenzwert durch die Drehzahlinformationen auf Traktionsverlust der angetriebenen Räder zu erkennen. Die erfindungsgemäße Steuereinheit zeichnet sich dadurch aus, dass die Steuereinheit weiterhin dazu ausgebildet ist, die Betätigung der Zuschaltvorrichtung bei Erkennen auf Traktionsverlust der angetriebenen Räder automatisiert auszulösen. Die Betätigung der Zuschaltvorrichtung wird automatisiert erst bei Überschreiten einer Geschwindigkeitsschwelle ausgelöst. Die erfindungsgemäße Steuereinheit umfasst somit alle notwendigen Mittel zur Ausführung des erfindungsgemäßen Verfahrens.

Bevorzugt ist es vorgesehen, dass die Steuereinheit einen elektronischen Speicher umfasst, in welchem der Referenzwert bzw. eine Geschwindigkeitsschwelle bzw. die obere Schwellenabweichung bzw. die untere Schwellenabweichung abrufbar ablegbar sind. Alternativ kann der Referenzwert bzw. die Geschwindigkeitsschwelle bzw. die obere Schwellenabweichung bzw. die untere Schwellenabweichung auch in einem elektronischen Speicher eines anderen Steuergeräts abrufbar abgelegt werden. Denkbar wäre z.B. ein elektronischer Speicher eines Bremsensteuergeräts oder eines Getriebesteuergeräts. Sofern der Referenzwert bzw. die Geschwindigkeitsschwelle bzw. die obere Schwellenabweichung bzw. die untere Schwellenabweichung in einem elektronischen Speicher eines anderen Steuergeräts abgelegt ist besteht bevorzugt eine Datenverbindung zwischen der Steuereinheit und dem anderen Steuergerät, so dass der Referenzwert bzw. die Geschwindigkeitsschwelle bzw. die obere Schwellenabweichung bzw. die untere Schwellenabweichung an die erfindungsgemäße Steuereinheit übertragen werden können bzw. von dieser abgerufen werden können.

Besonders bevorzugt sind die Geschwindigkeitsschwelle bzw. die obere Schwellenabweichung bzw. die untere Schwellenabweichung in einem nicht-flüchtigen, nichtüberschreibbaren und nicht-löschbaren elektronischen Festspeicher der Steuereinheit oder eines anderen Steuergeräts abgelegt.

Weiterhin umfasst die Steuereinheit bevorzugt Drehzahl- bzw. ABS-Sensoren zum Erfassen der Drehzahlinformationen der angetriebenen Räder sowie der antreibbaren bzw. schleppbaren Räder. Die Drehzahl- bzw. ABS-Sensoren sind jedoch nicht notwendigerweise Bestandteil der erfindungsgemäßen Steuereinheit. Vielmehr ist es erfindungsgemäß ausreichend, wenn die von fahrzeugeigenen Drehzahl- bzw. ABS-Sensoren erfassten Drehzahlinformationen - z.B. über einen Fahrzeugdatenbus - der Steuereinheit zur Verfügung gestellt werden.

Außerdem umfasst die Steuereinheit bevorzugt ein elektronisches Rechenwerk, welches zumindest dazu ausgebildet ist, die erfassten Drehzahlinformationen der angetriebenen Räder mit dem Referenzwert zu vergleichen und zu prüfen, ob eine ggf. festgestellte Abweichung der erfassten Drehzahlinformationen der angetriebenen Räder um mehr als die obere bzw. untere Schwellenabweichung vom Referenzwert abweicht.

Besonders bevorzugt ist die Steuereinheit dazu ausgebildet, mittels des elektronischen Rechenwerks den Referenzwert zu bestimmen, z.B. aus den Drehzahlinformationen der geschleppten Räder bzw. den Drehzahlinformationen des am langsamsten drehenden angetriebenen Rads bzw. aus dem Lenkwinkel. Insbesondere wird der solcherart von der Steuereinheit ermittelte Referenzwert in einem flüchtigen elektronischen Speicher abrufbar abgelegt.

Bevorzugt ist die Steuereinheit in ein im Kraftfahrzeug vorhandenes Steuergerät integriert, z.B. in das Bremsensteuergerät oder in das Getriebesteuergerät. Insbesondere bevorzugt werden die elektronische Rechenleistung und der zur Verfügung stehende elektronische Speicher des anderen Steuergeräts soweit erweitert, dass dieses gleichzeitig die erfindungsgemäße Steuereinheit darstellen kann. Somit kann die Steuereinheit zu weiten Teilen auf die Hardwareresourcen dieses anderen Steuergeräts zurückgreifen, was eine besonders kostengünstige Implementierung in das Kraftfahrzeug erlaubt.

Gemäß einer bevorzugten Ausführungsform der Erfindung ist es vorgesehen, dass die Steuereinheit dazu ausgebildet ist, das erfindungsgemäße Verfahren auszuführen. Daraus ergeben sich die bereits im Zusammenhang mit dem erfindungsgemäßen Verfahren beschriebenen Vorteile.

Die Erfindung betrifft weiterhin eine landwirtschaftliche Arbeitsmaschine, umfassend ein Antriebsaggregat und mehrere Achsen, wobei Räder mindestens einer Achse angetrieben sind und wobei Räder mindestens einer weiteren Achse mittels einer Betätigung einer Zuschaltvorrichtung antreibbar sind und mittels eines Lösens der Zuschaltvorrichtung schleppbar sind. Die erfindungsgemäße landwirtschaftliche Arbeitsmaschine zeichnet sich dadurch aus, dass die Arbeitsmaschine weiterhin eine erfindungsgemäße Steuereinheit umfasst.

Die Zuschaltvorrichtung ist bevorzugt als lastschaltbare Zuschaltvorrichtung, z.B. als nasslaufende Lamellenkupplung ausgebildet. Dies ermöglicht eine automatisierte Betätigung der Zuschaltvorrichtung während der Fahrt.

Das Antriebsaggregat ist bevorzugt als Verbrennungsmotor ausgebildet. Alternativ bevorzugt kann das Antriebsaggregat auch als Elektromotor ausgebildet sein. Bevorzugt ist es vorgesehen, dass die landwirtschaftliche Arbeitsmaschine Drehzahl- bzw. ABS-Sensoren umfasst, wobei insbesondere jedem einzelnen Rad, unabhängig davon, ob es sich um ein angetriebenes, ein antreibbares oder um ein geschlepptes Rad handelt, ein Drehzahl- bzw. ABS-Sensor zugeordnet ist.

Nachfolgend wird die Erfindung anhand von in den Figuren dargestellten Ausführungsformen beispielhaft erläutert.

Es zeigen:
- Fig. 1: beispielhaft einen möglichen Ablauf eines erfindungsgemäßen Verfahrens in Form eines Flussdiagramms,
- Fig. 2: beispielhaft eine mögliche Ausbildungsform einer erfindungsgemäßen Steuereinheit,
- Fig. 3: beispielhaft eine mögliche Ausbildungsform einer erfindungsgemäßen landwirtschaftlichen Arbeitsmaschine und
- Fig. 4: beispielhaft eine weitere mögliche Ausbildungsform einer erfindungsgemäßen landwirtschaftlichen Arbeitsmaschine.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

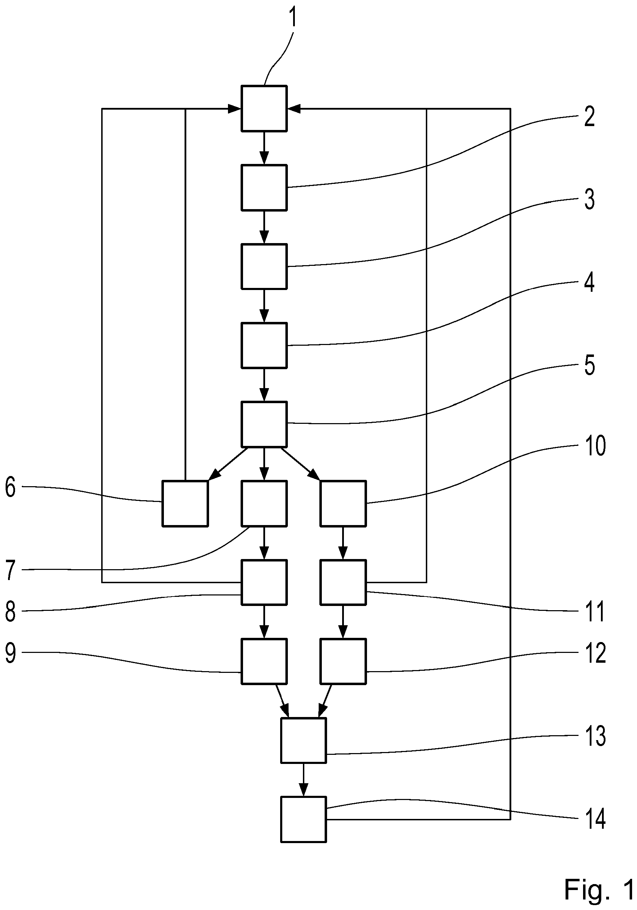

Fig. 1 zeigt beispielhaft einen möglichen Ablauf eines erfindungsgemäßen Verfahrens in Form eines Flussdiagramms. In Verfahrensschritt 1 werden zunächst von einer Steuereinheit 20 über ABS-Sensoren 26 Drehzahlinformationen von geschleppten Rädern 31, beispielsgemäß von zwei Vorderrädern 31, eines zweiachsigen und vierrädrigen Kraftfahrzeugs 30, beispielsgemäß einer landwirtschaftlichen Arbeitsmaschine 30, erfasst. In Schritt 2 wird aus den Drehzahlinformationen der geschleppten Räder 31 ein Referenzwert ermittelt. Die Ermittlung des Referenzwerts erfolgt wiederum durch die Steuereinheit 20, die hierfür mit einem elektronischen Rechenwerk 23 versehen ist. Das elektronische Rechenwerk 23 führt ein speziell hierfür ausgebildetes Computerprogrammprodukt aus, welches den Referenzwert aus den Drehzahlinformationen der geschleppten Räder 31 unter Berücksichtigung eines Lenkwinkels und einer vertikalen Radauslenkung ermittelt. Die Ermittlung des Referenzwerts erfolgt dabei beispielsgemäß alle 250 ms. Im folgenden Verfahrensschritt 3 wird der Referenzwert elektronisch abrufbar in einen flüchtigen elektronischen Speicher 21 der Steuervorrichtung 20 abgelegt. Alle 250 ms wird der bereits abgelegte Referenzwert durch den jeweils neu ermittelten Referenzwert ersetzt, indem dieser überschrieben wird. In Schritt 4 werden die Drehzahlinformationen der angetriebenen Räder 32 des Kraftfahrzeugs 30 erfasst, ebenfalls über die ABS-Sensoren 26. Im folgenden Verfahrensschritt 5 werden nun die in Schritt 4 erfassten Drehzahlinformationen der angetriebenen Räder 32 mit dem in Schritt 2 ermittelten Referenzwert verglichen. Sofern der Vergleich ergibt, dass die erfassten Drehzahlinformationen der angetriebenen Räder 32 um nicht mehr als eine obere Schwellenabweichung bzw. um nicht mehr als eine untere Schwellenabweichung vom Referenzwert abweichen, wird in Schritt 6 darauf erkannt, dass kein Traktionsverlust vorliegt. Das Verfahren beginnt in diesem Fall von neuem bei Schritt 1. Sofern der Vergleich jedoch ergibt, dass die erfassten Drehzahlinformationen der angetriebenen Räder 32 den Referenzwert um mehr als die obere Schwellenabweichung, beispielsgemäß 3 %, überschreiten, so wird in Schritt 7 auf Traktionsverlust infolge eines zu hohen Antriebsmoments erkannt. Im folgenden Schritt 8 wird geprüft, ob das Kraftfahrzeug 30 eine vorgegebene Geschwindigkeitsschwelle überschritten hat, beispielsgemäß 10 km/h. Der Wert der Geschwindigkeitsschwelle, d.h. die 10 km/h, sind elektronisch abrufbar und nicht überschreibbar oder löschbar in einem Festspeicher 22, beispielsgemäß einem ROM 22, der Steuereinheit 20 abgelegt. Sofern erkannt wird, dass das Kraftfahrzeug 30 die Geschwindigkeitsschwelle nicht überschritten hat, wird die Zuschaltvorrichtung 33 trotz des Traktionsverlusts nicht betätigt und das Verfahren beginnt von neuem bei Schritt 1. Sofern jedoch erkannt wird, dass das Kraftfahrzeug 30 die Geschwindigkeitsschwelle überschritten hat, wird in Schritt 9 die Zuschaltvorrichtung 33 automatisiert über einen Fahrzeugdatenbus 25, beispielsgemäß einen CAN-Bus 25, betätigt. Dies bewirkt beispielsgemäß, dass ein Aktuator einer nasslaufenden Lamellenkupplung die Lamellenkupplung schließt, sodass auch die Vorderräder 31 des Kraftfahrzeugs 30 angetrieben werden. Somit kann das Antriebsmoment über alle vier nun angetriebenen Räder 31, 32 auf den Untergrund übertragen werden, wodurch das von den zuvor ausschließlich angetriebenen Hinterrädern 32 übertragene Antriebsmoment pro angetriebenem Rad 31, 32 reduziert wird. Infolge dessen wird die Traktion der Hinterräder 32 nahezu augenblicklich wiederhergestellt und das Kraftfahrzeug 30 wird stabilisiert. Sofern der Vergleich in Schritt 5 jedoch ergib, dass die in Schritt 4 erfassten Drehzahlinformationen der angetriebenen Räder 32 den Referenzwert um mehr als die untere Schwellenabweichung, beispielsgemäß 4 %, unterschreiten, so wird in Schritt 10 auf Traktionsverlust infolge eines zu hohen Verzögerungsmoments erkannt. Das Verzögerungsmoment entsteht beispielsgemäß durch das Schalten aus einem höheren Gang in einen niedrigeren Gang bei hoher Geschwindigkeit und das gleichzeitige Ziehen eines Anhängers durch das Kraftfahrzeug 30. Beim Wiedereinkuppeln ist das durch das Antriebsaggregat 34 erzeugte Schleppmoment, welches als Verzögerungsmoment an den angetriebenen Rädern 32 wirkt, so groß, dass ein Traktionsverlust auftritt. Im folgenden Schritt 11 wird nun wiederum geprüft, ob das Kraftfahrzeug 30 eine vorgegebene Geschwindigkeitsschwelle überschritten hat, welche, wie bereits beschrieben, bei 10 km/h liegt. Sofern erkannt wird, dass das Kraftfahrzeug die Geschwindigkeitsschwelle nicht überschritten hat, wird die Zuschaltvorrichtung 33 trotz des Traktionsverlusts nicht betätigt und das Verfahren beginnt von neuem bei Schritt 1. Sofern jedoch erkannt wird, dass das Kraftfahrzeug 30 die Geschwindigkeitsschwelle überschritten hat, wird in Schritt 12 die Zuschaltvorrichtung 33 automatisiert über den CAN-Bus 25 betätigt. Dies bewirkt auch in diesem Fall, dass die Lamellenkupplung schließt, sodass auch die Vorderräder 31 des Kraftfahrzeugs 30 angetrieben werden. Somit kann das Antriebsmoment auch hier über alle vier nun angetriebenen Räder 31, 32 auf den Untergrund übertragen werden, wodurch das von den zuvor ausschließlich angetriebenen Hinterrädern 32 übertragene Antriebsmoment pro angetriebenem Rad 31, 32 reduziert wird. Infolge dessen wird die Traktion der Hinterräder 32 nahezu augenblicklich wiederhergestellt und das Kraftfahrzeug 30 wird stabilisiert. Im Verfahrensschritt 13 schließlich wird erkannt, dass die Traktion der angetriebenen Räder 31, 32 wiederhergestellt wurde, so dass in Schritt 14 die zuvor betätigte Zuschaltvorrichtung 33 wieder gelöst werden kann. Somit werden die Vorderräder 31 des Kraftfahrzeugs 30 nicht länger angetrieben sondern wieder geschleppt. Nachdem die Traktion der Hinterräder 32 wiederhergestellt wurde, löst die Steuereinheit 20 die Zuschaltvorrichtung 33 wieder, sodass die Vorderräder 31 wieder geschleppt werden. Anschließend beginnt das Verfahren erneut bei Schritt 1.

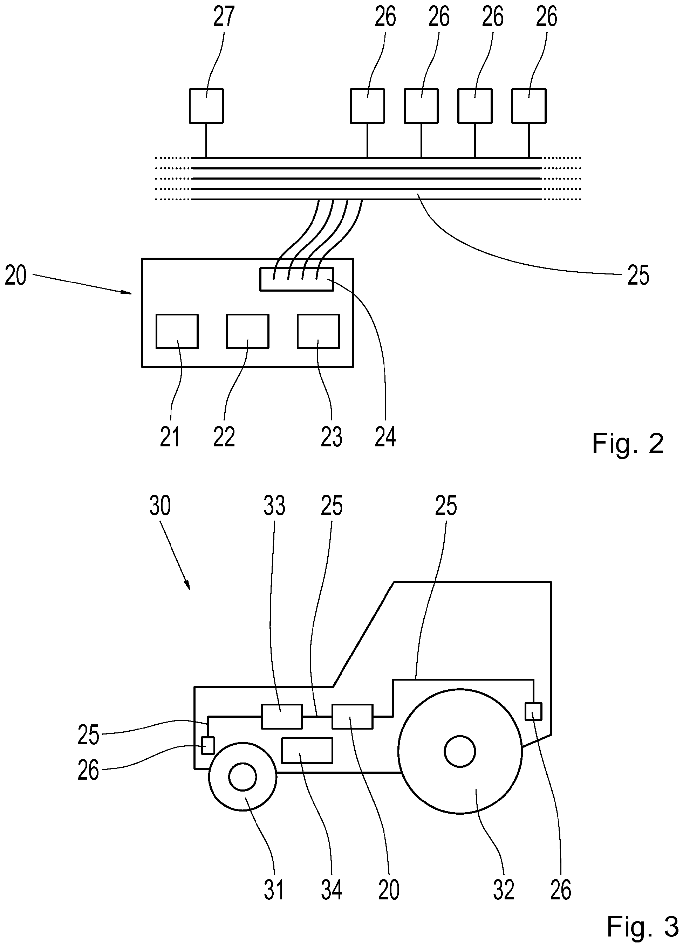

Fig. 2 zeigt beispielhaft und schematisch eine mögliche Ausbildungsform einer erfindungsgemäßen Steuereinheit 20. Die Steuereinheit 20 umfasst einen als dynamisches RAM, d.h. einen sog. *dynamic random access memory,* ausgebildeten elektronischen Speicher 21, in welchem der Referenzwert, mit dem die Drehzahlinformationen der angetriebenen Räder 32 verglichen werden, elektronisch abrufbar abgelegt ist. Die Steuereinheit 20 umfasst außerdem einen weiteren elektronischen Speicher 22, der als ROM, d.h. als sog. *read only memory,* ausgebildet ist. In diesem weiteren elektronischen Speicher 22 sind beispielsgemäß eine Geschwindigkeitsschwelle bzw. eine obere Schwellenabweichung bzw. eine untere Schwellenabweichung abrufbar abgelegt. Die obere Schwellenabweichung und die untere Schwellenabweichung werden von einem elektronischen Rechenwerk 23 herangezogen, um die Drehzahlinformationen der angetriebenen Räder 32 mit dem Referenzwert zu vergleichen. Das elektronische Rechenwerk 23 prüft weiterhin, ob eine Geschwindigkeit des Kraftfahrzeugs 30, in welchem die beispielhaft gezeigte Steuereinheit 20 angeordnet ist, die Geschwindigkeitsschwelle überschreitet. Das elektronische Rechenwerk 23 ist dabei als Mikroprozessor ausgebildet. Über eine Schnittstelle 24 ist die Steuereinheit 20 mit einem CAN-Bus 25 des Kraftfahrzeugs 30 auf Datenebene verbunden. Über den CAN-Bus 25 erhält die Steuereinheit 20 beispielsgemäß die Drehzahlinformationen der einzelnen Räder 31, 32, welche von den Rädern 31, 32 jeweils zugeordneten und ebenfalls an den CAN-Bus 25 auf Datenebene angeschlossenen Drehzahlsensoren 26 erfasst werden. Weiterhin ist die Steuereinheit 20 über den CAN-Bus 25 beispielsgemäß mit einem Steuermodul 27 eines elektrisch betätigbaren Aktuators einer Zuschaltvorrichtung 33 auf Datenebene verbunden, sodass die Steuereinheit 20 durch die Übermittlung eines entsprechenden elektronischen Datenbefehls an das Steuermodul 27 eine Betätigung bzw. ein Lösen der Zuschaltvorrichtung 33 bewirken kann. Im bereits beschriebenen elektronischen Speicher 22 ist außerdem ein Computerprogrammprodukt elektronisch abgelegt, welches vom elektronischen Rechenwerk 23 abgerufen und ausgeführt werden kann. Die Ausführung dieses Computerprogrammprodukts durch das elektronische Rechenwerk 23 ermöglicht der Steuereinheit 20 die Ausführung des erfindungsgemäßen Verfahrens.

Fig. 3 zeigt beispielhaft und schematisch eine mögliche Ausbildungsform einer erfindungsgemäßen landwirtschaftlichen Arbeitsmaschine 30. Die landwirtschaftliche Arbeitsmaschine 30 umfasst zwei antreibbare bzw. schleppbare Vorderräder 31 (von denen in der Darstellung der Fig. 3 nur eines zu sehen ist) und zwei angetriebene Hinterräder 32 (von denen in der Darstellung der Fig. 3 ebenfalls nur eines zu sehen ist). Weiterhin umfasst die landwirtschaftlichen Arbeitsmaschine 30 eine erfindungsgemäße Steuereinheit 20, die dazu ausgebildet ist, das erfindungsgemäße Verfahren auszuführen, sowie eine lastschaltbare Zuschaltvorrichtung 33, mittels deren Betätigung bzw. Lösen die Vorderräder 31 der landwirtschaftlichen Arbeitsmaschine 30 angetrieben bzw. geschleppt werden können. Außerdem umfasst die landwirtschaftlichen Arbeitsmaschine 30 vier Drehzahlsensoren 26 (von denen in der Darstellung der Fig. 3 nur zwei zu sehen sind), die jeweils einem Vorderrad 31 bzw. einem Hinterrad 32 zugeordnet sind und dessen jeweilige Drehzahlen erfassen. Über einen CAN-Bus 25 ist die Steuereinheit 20 auf Datenebene mit der Zuschaltvorrichtung 33 und den Drehzahlsensoren 26 verbunden. Sofern die Steuereinheit 20 im Rahmen der Ausführung des erfindungsgemäßen Verfahrens auf einen Traktionsverlust erkennt, erfolgt über eine Betätigung der Zuschaltvorrichtung 33 ein Antrieb der zuvor geschleppten Vorderräder 31, wodurch sich die Kraftübertragungsfähigkeit der landwirtschaftlichen Arbeitsmaschine 30 im Wesentlichen verdoppelt, da somit zur Übertragung von Antriebsmomenten bzw. Verzögerungsmomenten die doppelte Anzahl an Rädern 31, 32 zur Verfügung steht.

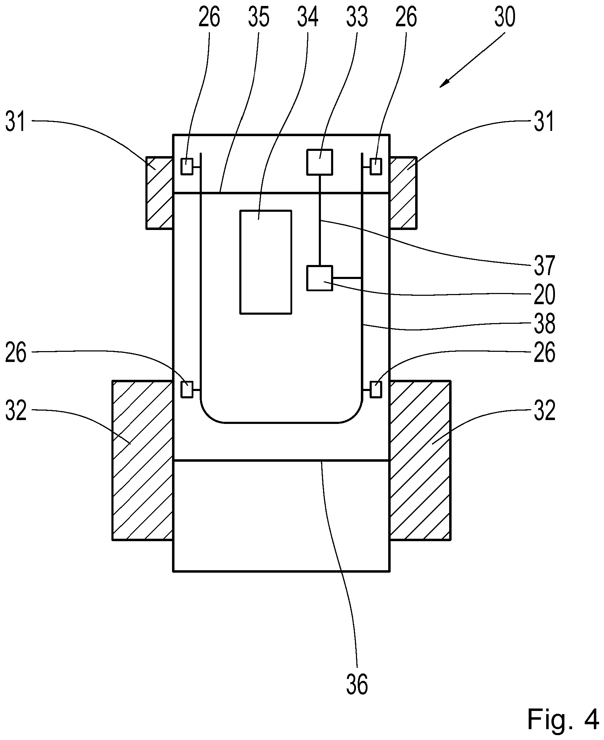

Fig. 4 zeigt beispielhaft und schematisch eine weitere mögliche Ausbildungsform einer erfindungsgemäßen landwirtschaftlichen Arbeitsmaschine 30, umfassend ein Antriebsaggregat 34 und zwei Achsen 35, 36 , wobei Räder 32 der Achse 36, beispielsgemäß der Hinterachse 36 angetrieben sind und wobei Räder 31 der Achse 35 mittels einer Betätigung einer Zuschaltvorrichtung 33 antreibbar sind und mittels eines Lösens der Zuschaltvorrichtung 33 schleppbar sind. Die landwirtschaftliche Arbeitsmaschine 30 umfasst weiterhin ABS-Sensoren 26, welche mit einem Fahrzeugdatenbus 38, beispielgemäß einem Flexray-Bus 38, auf Datenebene verbunden sind. Ebenfalls an den Flexray-Bus 38 ist eine erfindungsgemäße Steuereinheit 20 angeschlossen, welche dazu ausgebildet ist, das erfindungsgemäße Verfahren auszuführen. Sobald die Steuereinheit 20 im Rahmen der Ausführung des erfindungsgemäßen Verfahrens auf einen Traktionsverlust der angetriebenen Räder 32 erkennt, gibt sie über eine unmittelbare Datenanbindung 37 in Form eines mehradrigen und geschirmten Kabels 37 einen ersten elektronischen Datenbefehl an die Zuschaltvorrichtung 33, wodurch eine Betätigung der Zuschaltvorrichtung 33 und damit ein Antrieb der antreibbaren bzw. schleppbaren Räder 31 bewirkt wird. Sobald die Steuereinheit 20 im Rahmen der Ausführung des erfindungsgemäßen Verfahrens auf Wiederherstellung der Traktion der angetriebenen Räder 32 erkennt, gibt sie über die unmittelbare Datenanbindung einen zweiten elektronischen Datenbefehl an die Zuschaltvorrichtung 33, wodurch ein Lösen der Zuschaltvorrichtung 33 und damit ein Schleppen der antreibbaren bzw. schleppbaren Räder 31 bewirkt wird.

### Bezugszeichen

- 1: Erfassen von Drehzahlinformationen der geschleppten Räder
- 2: Ermitteln des Referenzwerts
- 3: Ablegen des Referenzwerts
- 4: Erfassen von Drehzahlinformationen der angetriebenen Räder
- 5: Vergleich der Drehzahlinformationen der angetriebenen Räder mit dem Referenzwert
- 6: Erkennen, dass kein Traktionsverlust vorliegt
- 7: Erkennen auf Traktionsverlust
- 8: Prüfen, ob das Kraftfahrzeug die Geschwindigkeitsschwelle überschritten hat
- 9: Betätigung der Zuschaltvorrichtung
- 10: Erkennen auf Traktionsverlust
- 11: Prüfen, ob das Kraftfahrzeug die Geschwindigkeitsschwelle überschritten hat
- 12: Betätigung der Zuschaltvorrichtung
- 13: Erkennen auf Wiederherstellung der Traktion
- 14: Lösen der Zuschaltvorrichtung
- 20: Steuereinheit
- 21: elektronischer Speicher, flüchtige Speicher
- 22: elektronischer Speicher, Festspeicher
- 23: elektronisches Rechenwerk, Mikroprozessor
- 24: Schnittstelle
- 25: Fahrzeugdatenbus, CAN-Bus
- 26: Drehzahlsensoren
- 27: Steuermodul
- 30: Kraftfahrzeug, landwirtschaftliche Arbeitsmaschine
- 31: antreibbare und schleppbare Räder, Vorderräder
- 32: angetriebene Räder, Hinterräder
- 33: Zuschaltvorrichtung
- 34: Antriebsaggregat
- 35: Achse mit antreibbaren und schleppbaren Rädern, Vorderachse
- 36: Achse mit angetriebenen Rädern, Hinterachse
- 37: unmittelbare Datenanbindung, mehradriges und geschirmtes Kabel
- 38: Fahrzeugdatenbus, Flexray-Bus

## Patentansprüche

1. Verfahren zur Traktionskontrolle von angetriebenen Rädern (32) eines mehrachsigen Kraftfahrzeugs (30), wobei die angetriebenen Räder (32) mindestens einer Achse (36) des Kraftfahrzeugs (30) zugeordnet sind, wobei mindestens einer weiteren Achse (35) des Kraftfahrzeugs (30) weitere Räder (31) zugeordnet sind, welche mittels einer Betätigung einer Zuschaltvorrichtung (33) antreibbar sind und mittels eines Lösens der Zuschaltvorrichtung (33) schleppbar sind, wobei von einer Steuereinheit (20) Drehzahlinformationen der angetriebenen Räder (32) erfasst werden (4) und mit einem Referenzwert verglichen werden (5) und wobei bei einem Überschreiten einer oberen Schwellenabweichung vom Referenzwert durch die Drehzahlinformationen oder bei einem Unterschreiten einer unteren Schwellenabweichung vom Referenzwert durch die Drehzahlinformationen von der Steuereinheit (20) auf Traktionsverlust der angetriebenen Räder (32) erkannt wird (7, 10), und wobei die Betätigung der Zuschaltvorrichtung (33) automatisiert durch die Steuereinheit (20) bei Erkennen auf Traktionsverlust der angetriebenen Räder (32) erfolgt (9, 12),
**dadurch gekennzeichnet, dass** die Betätigung der Zuschaltvorrichtung (9, 12, 33) automatisiert erst bei Überschreiten einer Geschwindigkeitsschwelle des Kraftfahrzeugs (30) erfolgt.

2. Verfahren nach Anspruch 1,
**dadurch gekennzeichnet, dass** der Referenzwert ständig in Abhängigkeit von Fahrsituationen ermittelt wird (2).

3. Verfahren nach mindestens einem der Ansprüche 1 und 2,
**dadurch gekennzeichnet, dass** der Referenzwert aus Drehzahlinformationen von geschleppten Rädern (31) ermittelt wird (2).

4. Verfahren nach mindestens einem der Ansprüche 1 bis 3,
**dadurch gekennzeichnet, dass** das Lösen der Zuschaltvorrichtung (33) automatisiert erfolgt (14), wenn auf Wiederherstellung einer Traktion der angetriebenen Räder (32) erkannt wird.

5. Verfahren nach mindestens einem der Ansprüche 1 bis 4,
**dadurch gekennzeichnet, dass** die Betätigung der Zuschaltvorrichtung (9, 12, 33) und das Lösen der Zuschaltvorrichtung (14, 33) elektronisch über einen Fahrzeugdatenbus (25, 38) erfolgt.

6. Verfahren nach mindestens einem der Ansprüche 1 bis 5,
**dadurch gekennzeichnet, dass** die Betätigung der Zuschaltvorrichtung (9, 12, 33) und das Lösen der Zuschaltvorrichtung (14, 33) elektronisch über eine unmittelbare Datenanbindung (37) der Steuereinheit (20) an die Zuschaltvorrichtung (33) erfolgt.

7. Steuereinheit (20) zur Traktionskontrolle von angetriebenen Rädern (32) für ein mehrachsiges Kraftfahrzeug (30), wobei die angetriebenen Räder (32) mindestens einer Achse (36) des Kraftfahrzeugs (30) zugeordnet sind und wobei mindestens einer weiteren Achse (35) des Kraftfahrzeugs (30) weitere Räder (31) zugeordnet sind, welche mittels einer Betätigung einer Zuschaltvorrichtung (33) antreibbar sind und mittels eines Lösens der Zuschaltvorrichtung (33) schleppbar sind, wobei die Steuereinheit (20) dazu ausgebildet ist, Drehzahlinformationen der angetriebenen Räder (32) zu erfassen (4) und mit einem Referenzwert zu vergleichen (5) und wobei die Steuereinheit (20) dazu ausgebildet ist, bei einem Überschreiten einer oberen Schwellenabweichung vom Referenzwert durch die Drehzahlinformationen oder bei einem Unterschreiten einer unteren Schwellenabweichung vom Referenzwert durch die Drehzahlinformationen auf Traktionsverlust der angetriebenen Räder (32) zu erkennen (7, 10), und wobei
die Steuereinheit (20) weiterhin dazu ausgebildet ist, die Betätigung der Zuschaltvorrichtung (33) bei Erkennen auf Traktionsverlust der angetriebenen Räder (32) automatisiert auszulösen (9, 12),
**dadurch gekennzeichnet, dass** die Steuereinheit (20) dazu ausgebildet ist, die Betätigung der Zuschaltvorrichtung (9, 12, 33) automatisiert erst bei Überschreiten einer Geschwindigkeitsschwelle des Kraftfahrzeugs (30) auszulösen (9, 12).

8. Steuereinheit (20) nach Anspruch 7,
**dadurch gekennzeichnet, dass** die Steuereinheit (20) dazu ausgebildet ist, ein Verfahren nach mindestens einem der Ansprüche 1 bis 6.

9. Landwirtschaftliche Arbeitsmaschine (30), umfassend ein Antriebsaggregat (34) und mehrere Achsen (35, 36), wobei Räder (31, 32) mindestens einer Achse (36) angetrieben sind und wobei Räder (31, 32) mindestens einer weiteren Achse (35) mittels einer Betätigung einer Zuschaltvorrichtung (33) antreibbar sind und mittels eines Lösens der Zuschaltvorrichtung (33) schleppbar sind,
**dadurch gekennzeichnet, dass** die Arbeitsmaschine (30) weiterhin eine Steuereinheit (20) nach mindestens einem der Ansprüche 7 und 8 umfasst.

## Claims

1. Method for traction control of driven wheels (32) of a multi-axle motor vehicle (30), wherein the driven wheels (32) are assigned to at least one axle (36) of the motor vehicle (30), wherein further wheels (31) are assigned to at least one further axle (35) of the motor vehicle (30), which wheels (31) can be driven by means of activation of an engagement device (33) and can be towed by releasing the engagement device (33), wherein rotational speed information of the driven wheels (32) is acquired (4) by a control unit (20) and is compared (5) with a reference value, and wherein when the rotational speed information exceeds an upper threshold deviation from the reference value or when the rotational speed information undershoots a lower threshold deviation from the reference value the control unit (20) detects (7, 10) a loss of traction by the driven wheels (32), and wherein the activation of the engagement device (33) is carried out (9, 12) in an automated fashion by the control unit (20) when a loss of traction of the driven wheels (32) is detected, **characterized in that** the activation of the engagement device (9, 12, 33) is not carried out in an automated fashion until a speed threshold of the motor vehicle (30) is exceeded.

2. Method according to Claim 1,
**characterized in that** the reference value is continuously obtained (2) in dependence on driving situations.

3. Method according to at least one of Claims 1 and 2,
**characterized in that** the reference value is determined (2) from rotational speed information of towed wheels (31) .

4. Method according to at least one of Claims 1 to 3, **characterized in that** the release of the engagement device (33) is carried out (14) in an automated fashion when it is detected that traction of the driven wheels (32) has been restored.

5. Method according to at least one of Claims 1 to 4, **characterized in that** the activation of the engagement device (9, 12, 33) and the release of the engagement device (14, 33) are carried out electronically via a vehicle data bus (25, 38).

6. Method according to at least one of Claims 1 to 5, **characterized in that** the activation of the engagement device (9, 12, 33) and the release of the engagement device (14, 33) are carried out electronically via a direct data connector (37) of the control unit (20) to the engagement device (33).

7. Control unit (20) for traction control of driven wheels (32) for a multi-axle motor vehicle (30), wherein the driven wheels (32) are assigned to at least one axle (36) of the motor vehicle (30) and wherein further wheels (31) are assigned to at least one further axle (35) of the motor vehicle (30), which wheels can be driven by means of activation of an engagement device (33) and can be towed by means of release of the engagement device (33), wherein the control unit (20) is designed to acquire (4) rotational speed information of the driven wheels (32) and compare (5) it with a reference value, and wherein the control unit (20) is designed to detect (7, 10) a loss of traction of the driven wheels (32) when the rotational speed information exceeds an upper threshold deviation from the reference value or the rotational speed information undershoots a lower threshold deviation from the reference value, and wherein the control unit (20) is also designed to trigger (9, 12) the activation of the engagement device (33) in an automated fashion when a loss of traction of the driven wheels (32) is detected,
**characterized in that** the control unit (20) is designed not to trigger (9, 12) the activation of the engagement device (9, 12, 33) in an automated fashion until the motor vehicle (30) exceeds a speed threshold.

8. Control unit (20) according to Claim 7,
**characterized in that** the control unit (20) is designed to perform a method according to at least one of Claims 1 to 6.

9. Agricultural machine (30), comprising a drive assembly (34) and a plurality of axles (35, 36), wherein wheels (31, 32) of at least one axle (36) are driven, and wherein wheels (31, 32) of at least one further axle (35) can be driven by means of activation of an engagement device (33) and can be towed by means of release of the engagement device (33),
**characterized in that** the machine (30) also comprises a control unit (20) according to at least one of Claims 7 and 8.

## Revendications

1. Procédé de commande de traction de roues motrices (32) d'un véhicule automobile à plusieurs essieux (30), les roues motrices (32) étant associées à au moins un essieu (36) du véhicule automobile (30), au moins un autre essieu (35) du véhicule automobile (30) étant associé à d'autres roues (31) qui peuvent être motrices par l'activation d'un dispositif d'embrayage (33) et qui peuvent être traînées par désactivation du dispositif d'embrayage (33), des informations de vitesse de rotation des roues motrices (32) étant détectées (4) par une unité de commande (20) et comparées à une valeur de référence (5) et l'unité de commande (20) détectant (7, 10) la perte de traction des roues motrices (32) si les informations de vitesse de rotation deviennent supérieures à un écart seuil supérieur par rapport à la valeur de référence ou si les informations de vitesse de rotation deviennent inférieures à un écart seuil inférieur par rapport à la valeur de référence, et l'activation du dispositif d'embrayage (33) étant effectuée (9, 12) automatiquement par l'unité de commande (20) lors de la détection d'une perte de traction des roues motrices (32),
**caractérisé en ce que** l'activation du dispositif d'embrayage (9, 12, 33) n'est effectuée automatiquement qu'en cas de dépassement d'un seuil de vitesse du véhicule automobile (30).

2. Procédé selon la revendication 1,
**caractérisé en ce que** la valeur de référence est déterminée en continu en fonction des situations de conduite (2).

3. Procédé selon l'une au moins des revendications 1 et 2,
**caractérisé en ce que** la valeur de référence est déterminée (2) à partir des informations de vitesse de rotation des roues traînées (31).

4. Procédé selon l'une au moins des revendications 1 à 3,
**caractérisé en ce que** le dispositif d'activation (33) est libéré automatiquement (14) lorsqu'il est détecté que la traction des roues motrices (32) a été rétablie.

5. Procédé selon l'une au moins des revendications 1 à 4,
**caractérisé en ce que** l'activation du dispositif d'embrayage (9, 12, 33) et la libération du dispositif d'embrayage (14, 33) sont effectuées électroniquement par le biais d'un bus de données de véhicule (25, 38).

6. Procédé selon l'une au moins des revendications 1 à 5,
**caractérisé en ce que** l'activation du dispositif d'embrayage (9, 12, 33) et la libération du dispositif d'embrayage (14, 33) sont effectuées électroniquement par le biais d'une liaison de données directe (37) entre l'unité de commande (20) et le dispositif d'embrayage (33).

7. Unité de commande (20) destinée à commander la traction des roues motrices (32) d'un véhicule automobile à plusieurs essieux (30), les roues motrices (32) étant associées à au moins un essieu (36) du véhicule automobile (30) et au moins un autre essieu (35) du véhicule automobile (30) étant associé à d'autres roues (31) qui peuvent être motrices par l'activation d'un dispositif d'embrayage (33) et qui peuvent être traînées par désactivation du dispositif d'embrayage (33), l'unité de commande (20) étant conçue pour détecter (4) les informations de vitesse de rotation des roues motrices (32) et pour les comparer (5) à une valeur de référence et l'unité de commande (20) étant conçue pour détecter (7, 10) la perte de traction des roues motrices (32) si les informations de vitesse de rotation deviennent supérieures à un écart seuil supérieur par rapport à la valeur de référence ou si les informations de vitesse de rotation deviennent inférieures à un écart seuil inférieur par rapport à la valeur de référence, et l'unité de commande (20) étant également conçue pour déclencher automatiquement (9, 12) l'activation du dispositif d'embrayage (33) lors de la détection de perte de traction des roues motrices (32),
**caractérisé en ce que** l'unité de commande (20) est conçue pour déclencher automatiquement (9, 12) l'activation du dispositif d'embrayage (9, 12, 33) uniquement en cas de dépassement d'un seuil de vitesse de rotation du véhicule automobile (30).

8. Unité de commande (20) selon la revendication 7, **caractérisée en ce que** l'unité de commande (20) est conçue pour mettre en œuvre un procédé selon l'une au moins des revendications 1 à 6.

9. Machine de travail agricole (30), comprenant une unité d'entraînement (34) et une pluralité d'essieux (35, 36), les roues (31, 32) d'au moins un essieu (36) pouvant être motrices et les roues (31, 32) d'au moins un autre essieu (35) pouvant être motrices par activation d'un dispositif d'embrayage (33) et pouvant être traînées par désactivation du dispositif d'embrayage (33),
**caractérisée en ce que** la machine de travail (30) comprend en outre une unité de commande (20) selon l'une au moins des revendications 7 et 8.
